(19) Europäisches Patentamt

European Patent Office

Office européen des brevets

(11) **EP 1 182 604 A1**

(12) **EUROPEAN PATENT APPLICATION**

(43) Date of publication:
**27.02.2002 Bulletin 2002/09**

(51) Int Cl.⁷: $G06K\ 9/32$, $G06K\ 7/10$

(21) Application number: **00118002.5**

(22) Date of filing: **22.08.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Setrix AG**
**80807 München (DE)**

(72) Inventor: **Chiu, Ming-Yee**
**Princeton Jct., NJ 08540 (US)**

(74) Representative: **Fischer, Volker, Dipl.-Ing. et al**
**Epping Hermann & Fischer Ridlerstrasse 55**
**80339 München (DE)**

(54) **Method and apparatus for reading a bar code**

(57) A method for reading a bar code digitally records a two-dimensional low resolution image by a camera. A modified Hough Transform obtains vote counts on lines relative to a reference point. The votes are clustered to obtain the bin axis of the bar code. The decoding step of the bar code uses an intensity profile along the bin direction.

Figure 3A

**Description**

FIELD OF THE INVENTION

This invention relates to the detection and recognition of one-dimensional bar codes from two-dimensional images taken from video or still camera.

BACKGROUND OF THE INVENTION

A typical bar code as shown in "Elements of a Bar Code System" from HP Agilent Technologies, Application Note 1013 (available from http://www.semiconductor.agilent.com/barcode/ appindex.html) consists of many black solid lines with varying widths, called bars. Between bars are spaces that also have varying widths. The direction parallel to the bar or space lines is referred to as the bar direction or bar axis. The direction orthogonal to the bar axis is referred to as the bin direction or bin axis. The bin direction is the scanning direction where the bar code signal, represented by alternating widths of the bar and space elements, is encoded. Currently 1-D bar bodes can be classified to either a 2-level or a 4-level bar code. Four-level bar codes use four different widths for the bar and space elements to encode data characters. Examples of the 4-level bar codes are UPC and EAN codes. Two-level bar codes use only two different widths in the bar and space elements. Examples of the 2-level bar codes are Code 39 and Interleaved 2 of 5 codes. For some 2-level bar codes, an inter-character space element is used to separate one data character to another. These bar codes are called discreet bar codes. For discreet bar codes, the width of the inter-character element can be arbitrary. The narrowest width of the bar or space element (excluding inter-character element for discreet codes) is called the X-dimension.

Usually a bar code is read by scanning the bar code label along the bin direction. The scanning can be performed by the sweeping motion of a user, or by a back-and-forth movement of a laser beam, or captured by a 1-D array of photosensitive elements. These bar code readers require a user to position and orient the bar code to the bar code reader. To eliminate the need to position and orient the bar code, omnidirectional laser-based scanners were designed where the laser beam is swept through a complex repetitive geometric pattern to pick up the bar code signal.

Another possibility to avoid the need to position and orient the bar code is to process 2-D images of the bar codes. The image can be obtained from a 2-D image sensor such as a camera, or a 1-D array of photo-sensors with a linear mechanical motion as in a flatbed scanner, of from a laser beam scanning in boh x and y directions.

Many commercial image-based bar code readers require high-resolution images in order to decode the widths of the bar and space elements reliably. For example, in a paper published by Axtel Inc.: "Reliable Barcode Recognition from Bitmaps, Axtel Inc. (available from http://www.axtel.com/ FILES/barpaper.doc), it is recommended that the bar code density should not be more than 8 characters per inch when the image is captured by a flatbed scanner in the 400 DPI resolution. This is equivalent to 1 character sampled with 50 pixels. For UPC or EAN codes, this sampling is roughly 7 pixels for the narrowest element (i.e., X-dimension) since the width of each character in the UPC/EAN codes is 7 X-dimensions. For UPC or EAN codes that consist of 12 data characters, it means that the image should have at least the size of 600 pixels. The typical consumer camera has a resolution of 640 x 480 pixels (e.g. VGA format).

There are many ways to detect the position and orientation of bar codes in a 2-D image. US patent 5,124,537 describes a virtual scan of the video raster memory to get 1-D intensity profile of the image similar to that used in the laser-based scanner inside the Point-of-Sale terminal. The 1-D intensity profile is then passed to a bar code decoder that checks if there is really a bar code scanned by the virtual scan line. This method does not locate the bar code directly; rather it uses a trial (scan) and test (decode) method to search for the legitimate bar code signal.

US patent 5,155,343 uses 4 types of block cells, each consists of 8 x 32 pixels, at 4 different orientations to determine first the coarse location and orientation of the bar code and then the fine orientation.

US patent 5,487,115 describes a method to locate multiple bar codes in the image by using the property that most edge points of the bar elements have the same edge orientation, which is along the bin direction. By depositing edge points to different feature images according to the orientation of the edge points, bar codes with different orientation can be separated in different feature images. By use of weighted morphological filters (i.e., majority dilation and minority erosion operators) the gaps of the edges points in the feature images coming from the edge lines of the bar and space elements are filled. Because the bar and space elements are closely packed in a bar code, this bridging operation can generate a solid rectangle for each bar code. The solid rectangle is representative of the bounding box of the bar code. Since other edge points from the cluttered background normally cannot generate a large solid rectangle, by detecting the location and orientation of large solid rectangles, the orientation of each bar code can be determined.

The bar code localization method used by US patent 5,487,115 assumes that the gap between the bar elements is roughly the same for all bar codes in the images since the weighted morphological operation can fill the gap of several pixels away.

When a large gap is present, which is the case when a large bar code is present in the image, then the morphological operation may not be able to bridge all bar and space elements of a bar code. Using different processing parameters can bridge a larger gap, however, it increases the risk of creating non-barcode region thereby erroneously defining a bar code region where actually no bar code is located. US patent 5,487,115 also describes a method to compute the widths of bar and space elements of the bar code from the 1-D intensity profile of the image along the bin direction. Instead of locating the edges of the bar and space elements, the known method calculates the widths using the areas under the 1-D profile after some global and local stretching of the 1-D scan profile. The images come from a linear array of CCDs (charged coupled devices) and the image size is 782 x 1288 pixels, which is larger than the VGA resolution commonly in video cameras.

SUMMARY OF THE INVENTION

It is a primary object of the present invention to provide a method and an apparatus for reading a bar code with various position and orientation with high accuracy using consumer-grade video cameras.

It is another object of the present invention to provide a method and an apparatus for reading bar codes with a wide range of bar/space density (X-direction) or a wide dimensional range along the bin direction.

It is another object of the present invention to provide a method and an apparatus to determine its orientation also in a cluttered background.

It is another object of the present invention to provide a method and an apparatus to accurately locate the edges of the bar code elements to enhance resolution.

The primary object of the invention is solved by a method for bar code reading comprising the steps of: recording a two-dimensional digital image including said bar code; obtaining edge points from said image; selecting a reference point; projecting said edge points on a line including said reference point; obtaining a direction of a cluster of projected edge points; obtaining an intensity profile along a curve defined by said direction; and decoding said bar code from said intensity profile.

An apparatus for reading a bar code comprises: an image acquisition device to record a two-dimensional digital image including said bar code; an image processor for: obtaining edge points from said image; selecting a reference point; projecting said edge points on a line including said reference point; obtaining a direction of a cluster of projected edge points; obtaining an intensity profile along a curve defined by said direction and decoding said bar code from said intensity profile.

The method as well as the apparatus according to the invention project the edge points of the elements captured in the image onto a curve. The curve is preferably a straight line through the reference point. The edge points from the bars of a bar code appear in one single cluster of projected edge points. This is independent of any spacing between the bars. As a result, the orientation of any bar code is securely detected within the captured image. The projection algorithm is based on a modified Hough Transform. The conventional Hough Transform, which is usually used to detect contiguous forms, is modified to detect the location of spaced-apart bars.

The method according to this invention enables the use of a low-resolution consumer camera to capture the bar code images and process the image to read the bar codes, independent of the position and orientation of the bar codes. When the 2-D image sensor is combined with a low-power consumption CPU, a low-power and small bar code reader can be built with no mechanical moving part and no power-hungry laser. This type of bar code reader can then be integrated into a cellular phone or a handheld device such as a PDA (Personal Digital Assistant) for performing barcode reading anywhere anytime.

As an advantage of this invention bar codes are recognized where there are only a few pixels (1-2 pixels) sampled across the narrowest element. In order to achieve this performance, sub-pixel accuracy for determining the precise edges of the bar and space elements is required.

The bar code clustering method according to this invention detects the bar code with high acuracy substantially independent of orientation and background. The widths of the elements can be computed in sub-pixel accuracy to read high density bar codes.

The invention enables the detection of multiple bar codes having arbitrary orientaion and a wide range of bar/space density within one image.

Preferred embodiments as well as their advantages are claimed in the dependent claims.

The projections of the edge points onto a straight line are counted and compared to a threshold value to obtain a peak section within said line thereby locating the projected edge points from a bar code. Then the orientation of the bar code within the captured image can be easily derived.

An intensity profile of the captured image is taken in a direction normal to the orientation of the peak section. Preferably, multiple intensity profiles within said peak section are obtained to either distinguish between two slightly shifted bar codes having the same direction or to eliminate the wrong bar code signal with adjacent characters at either end of the bar code. From an intensity profile along the bin axis the information presented by the bar code is evaluated.

Inherent with the Hough Transform is the effect that projections of edge points are spread with increasing distance from the reference point. Therefore when detecting the direction of a cluster of projected edge points relative to the reference point, the projected edge points within a window are accumulated. The window becomes larger with increasing distance from the reference point.

In accordance with the definition of the bar code by various standards the quiet zones within the intensity profiles are detected. The intensity value difference between successive sample points along the scanning direction of an intensity profile is obtained and compared to a predefined threshold value. When the number of samples below said predefined threshold exceeds a preset number Q, a quiet zone is detected. Otherwise the preset number Q is changed and the quiet zone detection steps are repeated.

Due to low-pass filtering of the capturing of the image by a digital camera the relation between thick and thin bars and/or spaces is changed. In order to compensate for this low-pass filtering the location of a transition from a thick to a thin element and vice versa is shifted to the thin element. As a result, the distance between bars is corrected, which is important for a secure and failure resistant bar code detection.

Basically, the location of the transition between bars and spaces is at the middle intensity between a pair of local maximum and minimum. For a transition between a thick and a thin element, the location is shifted closer to the thin element. Preferably, pairs of consecutive local maxima and local minima as well as pairs of local minima and local maxima are obtained. Further, a moving average is calculated for the local maxima and local minima of each pair. When the moving average is closer to the middle intensity of a pair of maximum/minimum then the local maximum/ minimum is replaced by the respective moving average to calculate the middle intensity. As a result, the location of the middle intensity obtained from the moving average instead of the actual value of the local maximum/minimum, which defines the transition between a bar and a space, is shifted to the thin element. Any low-pass filtering caused by the capturing of an image by a digital camera is compensated. As a consequence, the resolution is enhanced to sub-pixel accuracy. This enables the use of a small CCD- or CMOS-sensor, e.g. with 640 x 480 pixels. The correction algorithm from above is also applicable as a standalone method for bar code decoding based on an already present intensity profile of the bar code.

With a low resolution CCD- or CMOS-sensor, an apparatus according to the invention has low power consumption. Preferably, the apparatus can be a handheld device, e.g. a PDA (personal digital assistant) or a mobile phone for a cellular network. The handheld device can be powered by a battery. The camera with the CCD- or CMOS-sensor may be included into the housing of a mobile phone so that any bar code can be captured. The alphanumerical information decoded from the bar code can then be transmitted via the communication link provided by the mobile phone to a central station, e.g. a data base for appropriate evaluation. The host returns any value added information back to the mobile phone to provide the user with additional information collected in response to the bar code.

Alternatively, a 1-D-sensor which scans the bar code can be used instead of a 2-D-sensor. The 1-D-sensor may comprise photodiodes moving across the image to be captured thereby providing a 2-D-image. Any other known embodiment for capturing a 2-D digital image can be used in connection with the invention.

BRIEF DESCRIPTION OF THE DRAWINGS

The method and the apparatus are described in connection with the figures in the drawings. The figures show:

Figure 1          a flowchart of the detection algorithm;

Figure 2          an example of a bar code;

Figure 3A          a recorded image comprising several bar codes;

Figure 3B          the vote counts projected onto straight lines through a reference point;

Figure 4          the annular distribution of the vote counts with respect to the reference point;

Figure 5A          another recorded image comprising two bar codes and the projection line;

Figure 5B          the vote count profile along the projection line;

Figure 6          a fine resolution of the distribution of projections of edge points along the projection line;

Figure 7          another recorded image with multiple bar codes and multiple paths of intensity profiles through the bar codes;

Figure 8A   another recorded image;

Figure 8B and 8C   intensity profiles through the bar code of figure 8A with different amplification factor;

Figure 9   an example of a bar code showing a low-pass filtering effect;

Figure 10   a flowchart of a method to compensate the low-pass filtering effect;

Figure 11A   the intensity profile of figures 8B and 8C at higher resolution;

Figure 11B   an example of a intensity profile to demonstrate pairs of local maxima and local minima at higher resolution; and

Figure 12   an apparatus for reading a bar code according to the invention.

DETAILED DESCRIPTION OF THE PREFERRED EMBODIMENT

The bar code reader system shown in Figure 12 comprises an image acquisition sub-system 1200, 1210, an image processing and bar code decoding sub-system 1220 and a communication sub-system 1230, 1250. The image acquisition system can be a camera 1200 with fixed-focus or auto-focus lens to acquire a 2-D intensity image, e.g. a CCD or CMOS device 1210. The image may contain multiple bar codes in the field of view of the camera. The image processing and bar code decoding sub-system is a computer or microprocessor based electronic device 1220 with software to process the digitized image, recognize the symbology of the bar code and decode the data characters in the bar code. The communication sub-system 1230 sends the bar code message as a stream of ASCII characters to other system for further processing, using Ethernet, ISDN, radio link, or wireless cellular network. The bar code reader system being a handheld device, the housing may contains a mobile phone which transmits the data over the antenna 1250 within the data or the control channel to a host system. The image acquisition sub-system may also be a 1-D sensor which moves across the image to be captured. Since the method according to the provides subpixel accuracy, a low cost and low power consuming CMOS or CCD sensor can be used. This enables the handheld system to be powered by a battery 1240 with sufficient operating time.

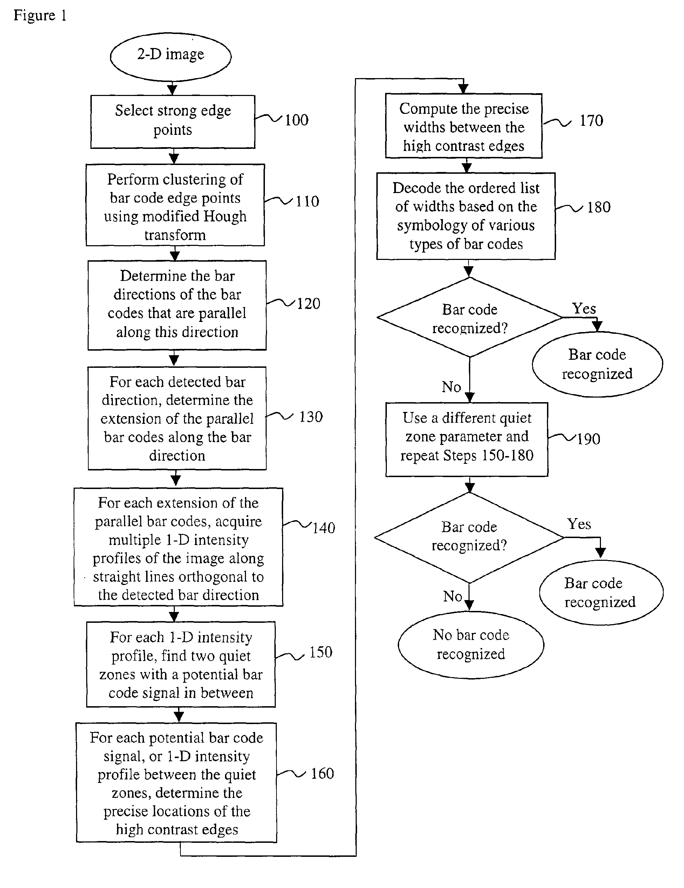

Figure 1 shows the overall processing steps of the image processing and bar code decoding sub-system. Starting from a digitized image from the camera, or any other sources, step 100 is to select strong edge points in the image. The strong edge points are defined as those pixels in the image whose gradient magnitude is greater than a threshold. The gradient magnitude is computed by first convolving the image with two Sobel 3x3 operators, one horizontal and one vertical, as is explained in the book "Machine Vision: Theory, Algorithms, Practicalities" by E. R. Davies, 1997. The resulting horizontal edge image ($g_x$) and vertical edge image ($g_y$) are then squared and added together, pixel-by-pixel. The gradient magnitude image is then derived by taking the square root of the sum image. All pixels in the gradient magnitude image whose value is greater than a fixed threshold are selected as strong edge points. Usually the edge points of the bar and space elements in the bar code are selected because of the high contrast of the bar code. The vector ($g_x$, $g_y$) at each specific strong edge point is normal to the edge line at that point.

Step 110 performs a modified Hough Transform on the selected strong edge points. The purpose is to cluster all strong edge points coming from the bar codes while spreading out those strong edge points coming from the cluttered background. This way the bar codes can be detected easily. Techniques to detect straight lines using the general Hough Transform are well known from "Machine Vision: Theory, Algorithms, Practicalities" by E. R. Davies, 1997. However, it cannot be used for bar code detection since in typical bar code reading environment, there are many straight lines in the background that can confuse the detection of bar codes. This invention uses a modified Hough Transform to detect patterns that consist of parallel lines. The bar code label is a pattern of parallel lines with different spacing between lines.

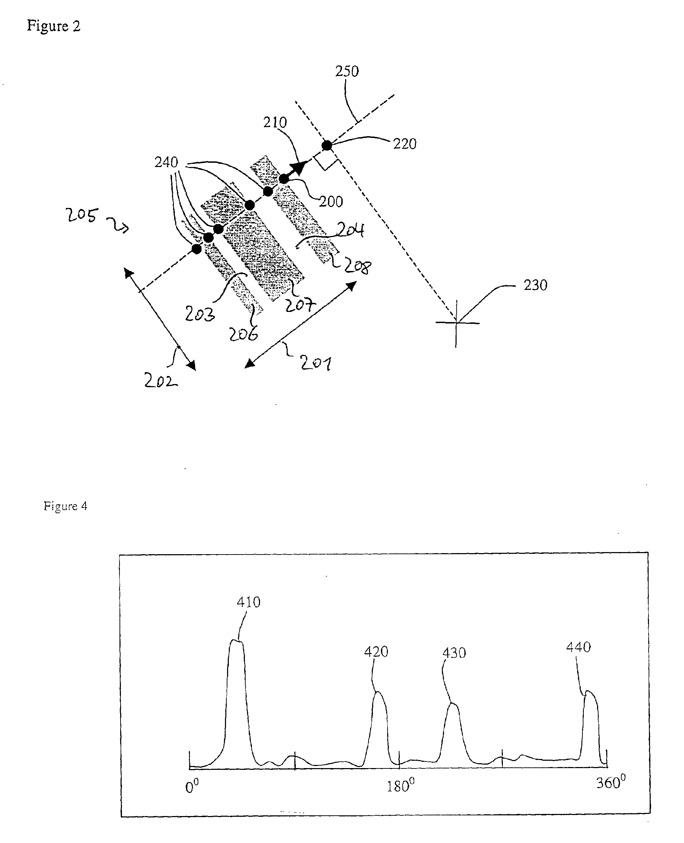

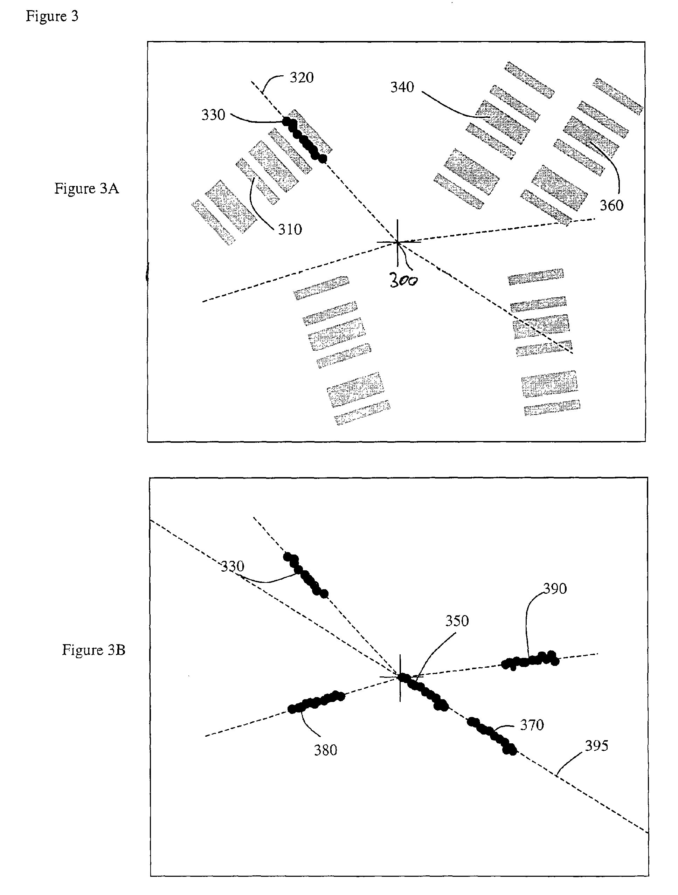

Figure 2 shows an example for a barcode 205 having bars 206, 207, 208 and spaces 203, 204. The direction 201 is called bin axis, the direction 202 is called bar axis. Refering to Figure 2, points 200 and 240 are all strong edge points of the solid bar lines of the bar code. The edge normal 210 of point 200 is parallel to the vector ($g_x$, $g_y$) computed in step 100. If an origin at location 230 is selected, then for each strong edge point 200, a vote point 220 can be located by projecting from the origin 230 to the line 250 formed by the point 200 and its edge normal 210. Similarly, all other strong edge points 240 will deposit a vote point each at the same location 220 since they all have the same edge normal as point 200. Then the accumulated vote count at location 220 will be 6. If all the vote points are placed on a separate vote accumulation plane, then the vote count on that plane will show a "line" cluster for each pattern of parallel lines like a bar code is. To illustrate this, Figure 3A is used as an example. It shows an original intensity image with multiple bar codes. Figure 3B shows the vote counts in the vote accumulation plane. Point 300 is the selected origin, which can be the center of the image or any other location in the image. For bar code 310, the modified Hough Transform for the strong edge points from this bar code generates a line cluster 330 along the line 320, which passes through the origin 300. Similarly, bar code 340 generates the line cluster 350 in the vote accumulation plane. All other non-bar code strong edge points will be spread over the vote accumulation plane and will not generate high vote count at any one location.

The height of the line clusters from the bar codes is proportional to the number of the bar elements of the bar code. Therefore the more the data characters in the bar code, the more pronounced the peak is accumulated in the vote accumulation plane.

Essentially this modified Hough Transform compresses bar codes along their individual bin direction. Compared with the technique used by US Patent 5,487,115, the present bar code detection method has higher detection signal-to-noise ratio because of the clustering, there is no break between the bar elements and it requires less processing memory.

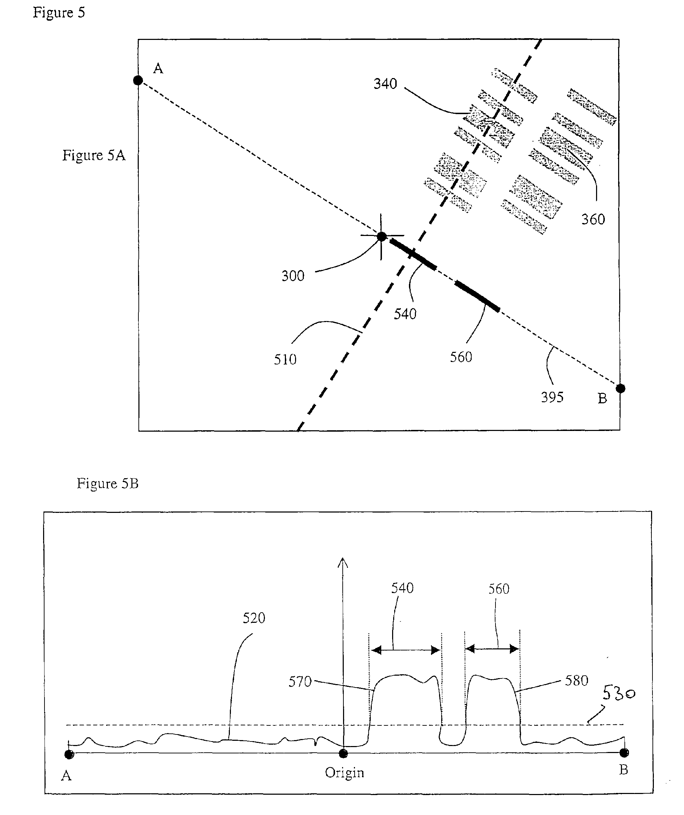

Step 120 determines the bar directions of all the bar codes in the images. From the example in Figure 3A, there are four prominent bar axis directions since bar code 340 and 360 have the same bar directions. From the vote counts in the vote accumulation plane obtained in step 110, we first select all pixels whose vote counts exceed a threshold. The angular directions of the selected pixels are computed. For each selected pixel, the vote count is deposited on the angular bins from 0 degree to 360 degrees based on the angular position of the selected pixel. To avoid angular singularity, the selected pixels that are close to the origin are ignored. The result is a vote-count weighted angular histogram as shown in Figure 4. The vote counts from the line clusters 350 and 370 in Figure 3B become a peak 410 in Figure 4. Similarly clusters 380, 330, 390 become peaks 420, 430, and 440 in Figure 4. By detecting the peaks in Figure 4, the angular position of the bar axes of all bar codes are determined.

From this point on, the processing will be repeated for each angular position detected in step 120, i.e. for each bar code direction. Each angular position may contain multiple bar codes that are parallel.

Step 130 determines the extension of the parallel bar codes. Assuming that the angular position corresponding to peak 410 in Figure 4, or the angle where line clusters 350 and 370 are located in Figure 3B is being processed. First a 1-D vote count profile is sampled along the line 395 in Figure 5A. The resulting 1-D function is shown in Figure 5B. This 1-D profile 520 will have two pronounced wide peaks 570 and 580 which correspond to the line clusters 350 and 370 in Figure 3B. The extension of the two wide peak sections can be determined by comparing the 1-D vote profile 520 with a threshold 530, as shown in Figure 5B. The two extensions 540, 560 determine the width and the location of the parallel bar codes along this angular direction, as shown in Figure 5A. Once the extension is determined, a scan line 510 orthogonal to the line 395 can be used to sample the original intensity image by selecting a location within the extension of the bar code.

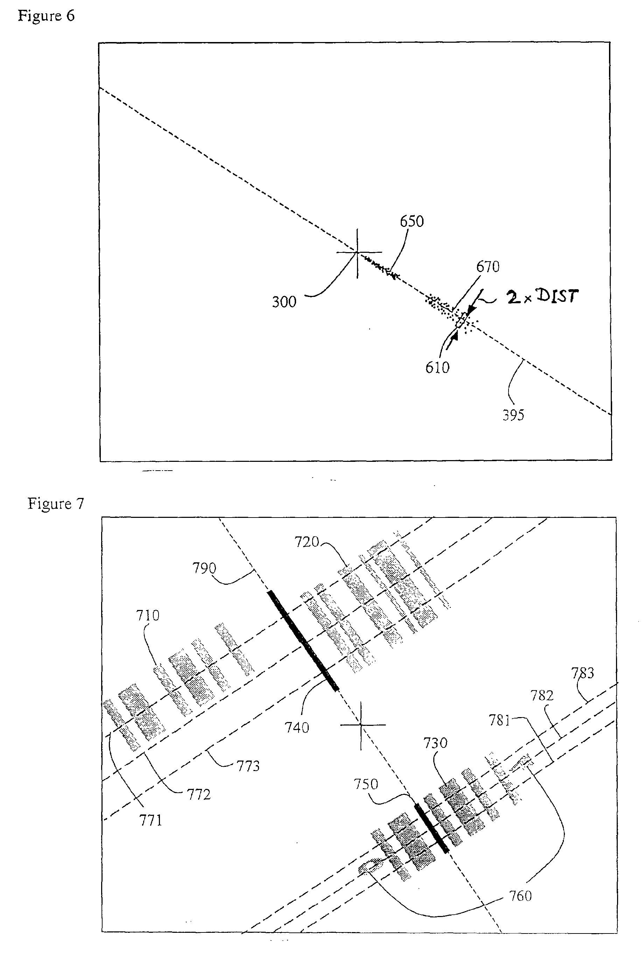

Step 130 comprises more complex evalutations due to the inaccuracy of the gradient angle of the strong edge points computed in step 100. As shown in the book from Davies, because of the finite size (3x3 pixels) of the Sobel operators used, the intrinsic error of the angle calculation of the edges from the $(g_x, g_y)$ vector is about plus or minus 1 degree. Other noise can increase this error further. The consequence of this inaccuracy in edge angle is to spread out the clusters of the vote counts in the vote accumulation plane. This is illustrated in Figure 6 where two ideal line clusters 350, 370 in Figure 3B are actually two spreading clusters 650, 670. The spread is larger when the point is further away from the origin. The reason for this spread is similar to the spread of the Hough Transform of a straight line, which is explained in the book from Davies.

Therefore, if a simple sampling of the vote counts along the line 395 is used, as described above, the value of the 1-D vote count function 520 will become smaller as the point is moved away from the origin. To compensate for this reduced vote counts due to spreading, all the vote counts that are within a certain distance DIST orthogonal to the line 395 are added together. This is illustrated with a rectangular box 610 in Figure 6 which has he width of 2 x DIST. The projected edge points which fall into this box are accumulatively counted. The counts inside this box 610 are added together. The width of the box is 2 x DIST and the height is equal to the sampling distance of the 1-D vote count function 520. As the sampling point is moved away from the origin, the distance DIST is proportionally increased so that the ratio of DIST over distance to the origin remains the same. This ratio, which is the spreading angle, may empirically be set to a predetermined small value, e.g. to 4 degrees. With this extra summation step, the vote count function 520 in Figure 5B can be obtained correctly.

Step 140 computes the 1-D intensity profile of the original image along a scan line 510 normal to the selected bar direction 395. The position of the scan line can be anywhere within the extension 540 of the wide peak 570 in Figure 5. Usually several 1-D intensity profiles along scan lines at various locations within the extension 540 are selected for the further processing. There are two reasons for multiple scan lines. Referring to Figure 7, bar codes 710 and 720 generate a single continuous wide peak on the 1-D vote count profile along line 790. The extension 740 covers both bar codes. If multiple scan lines, such as the three 771, 772, 773 lines shown in Figure 7, are used to obtain the intensity profile, both bar code signals are obtained for the processing in the further steps. Duplicate detection of the same bar code can be removed in the final step. The other reason for multiple scan lines is illustrated by the bar code 730.

Normally on both sides of the bar code, there should have a minimal width of white space, called "quiet zone", to isolate the bar code from the background. However, in some cases there are characters on the side of the bar code that are too close. Therefore the two characters 760 along the scan line 782 will be mistaken as part of the bar code signal in steps 150 and 160. This situation will not occur for scan lines 781 and 783.

From the 1-D intensity profile obtained from step 140, the next step 150 finds sections of the 1-D scan profile that may contain a bar code signal. As illustrated in Figure 7, scan line 771, the 1-D scan profile may have multiple bar code signals. The technique to find the bar code signals is to use the "quiet zones" on both sides of the bar codes. First, the absolute value of the difference of two neighboring points of the 1-D scan profile is generated. In the quiet zone, consecutive values of this 1-D difference function will be very small. Therefore, step 150 finds contiguous sections where the values of this new function are all below a threshold. These contiguous sections, or detected quiet zones, must have a minimum size of Q pixels (along the scan line). Q corresponds to the minimum size of quiet zones. Between two detected quiet zones is a potential bar code signal. Only those potential bar code signals that have a minimum size of B pixels are selected for further processing. Since bar codes of different density and size can be present in the image, if Q is set to a fixed value, then it is possible that a large space element in a large bar code is so large that it is mistaken as a quiet zone and one complete bar code is separated into two potential bar code signals. Later step 180 will reject both fragmented bar code signals. Therefore, to accommodate bar codes of various scales, several values for the parameter Q are used in step 150.

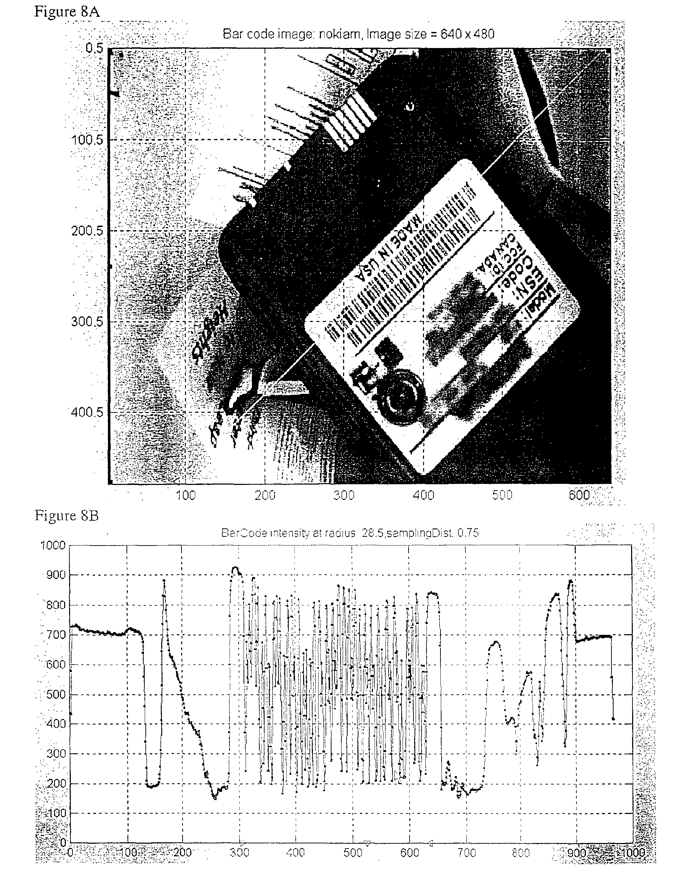

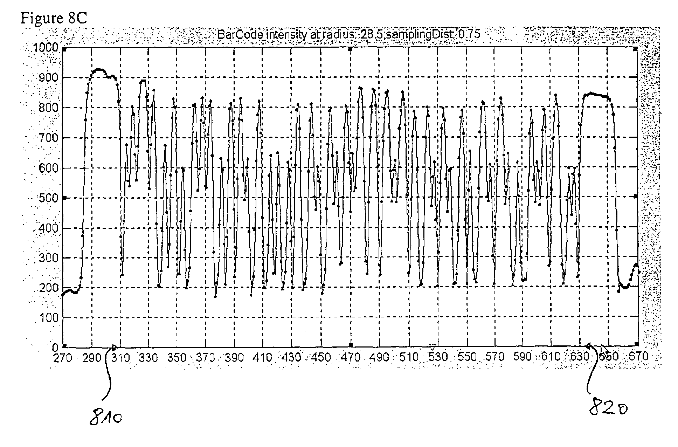

Shown in Figure 8A is a 640 x 480 image taken from a CMOS camera, the scan line detected is shown as a white line from the upper right corner to the lower left corner. The 1-D scan profile, with a sampling distance of 0.75 pixels, is shown in Figure 8B. Each solid dot is a sampling of the original intensity image with the bi-linear interpolation. The central portion of this 1-D profile is blown up in Figure 8C to show the detailed bar code signal. The quiet zones can be seen clearly in Figure 8C where the intensity variation is small. This potential bar code signal starts from the end of the front quiet zone and end at the start of the back quiet zone, as indicated by two triangular marks (810 and 820) on the horizontal axis of Figure 8C.

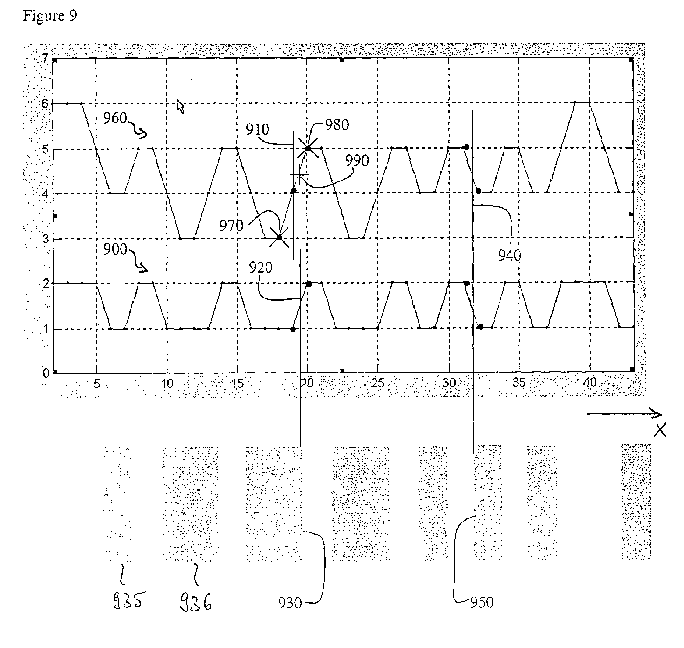

Step 160 determines the precise locations of the high contrast edges with sub-pixel accuracy. As shown in Figure 8C, the contrast of the bar and space lines is not uniform while the widths can be as small as 1 or 2 pixels. This can be seen also in Figure 8A where the narrow bars have lower contrast than the thick bars. The width-dependent non-uniform contrast of the bar and space elements is due to the finite size of the CCD or CMOS sensors and the finite bandwidth of the camera system. This is equivalent to a low pass filtering. To illustrate this, refer to the simulation in Figure 9. The 1-D scan profile 900 is an ideal bar code signal with intensity value ("2") for space (white) elements and intensity value ("1") for bar (black) elements. The profile 960 is obtained by a 3-point summation of the profile 900 to simulate the effect of low-pass filtering. As can be seen from profile 960, the intensity value of the narrow bar 935 is 4, which is higher than the value of the thick bar 936 which is "3". Similarly, the intensity value of the narrow space is 5, which is lower than the value of the thick space which is "6". The consequence of this effect is that the precise location of the edge is shifted. The ideal edge of black bar 930 is shown as a vertical line 920. If the edge location is defined as the location where its intensity value is the average of the intensity of the two neighboring local minimum and local maximum pair, then for the edge 930, its location is at x = 19.5 on the ideal profile 900. For low-pass profile 960, the edge location is shifted to x = 19.0, as indicated by the vertical line 910. However, for the edge 950, the edge locations for the ideal and the low-pass profiles are the same, which is at x = 31.5. In other words, the edge location of a thick element to a thin element transition, each element being a (black) bar or a (white) space, is shifted towards the thick element. Therefore, if a thick bar is between two thin space neighbors, then its width can be reduced by 2 times the location shift, one from each side.

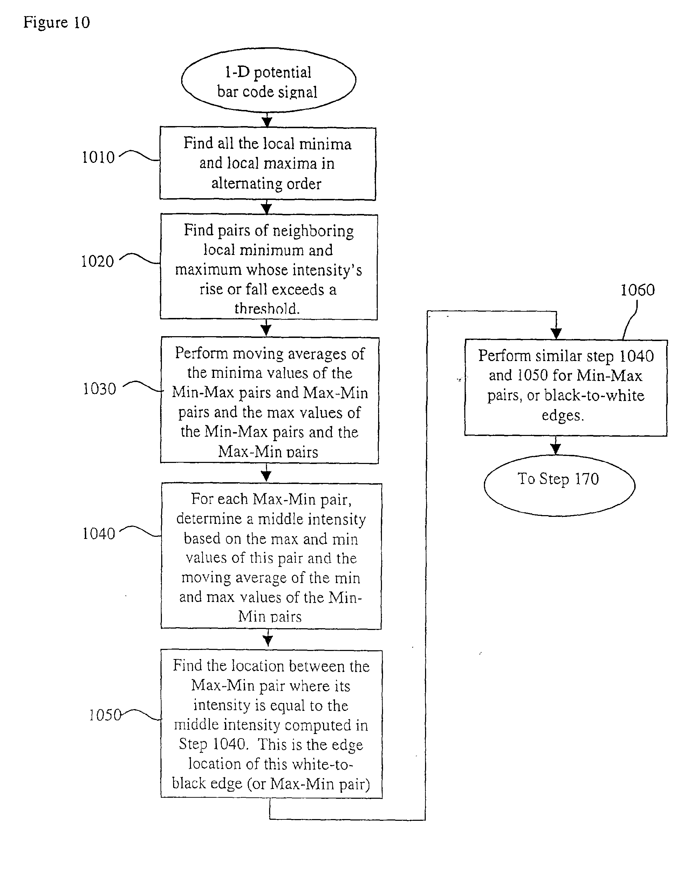

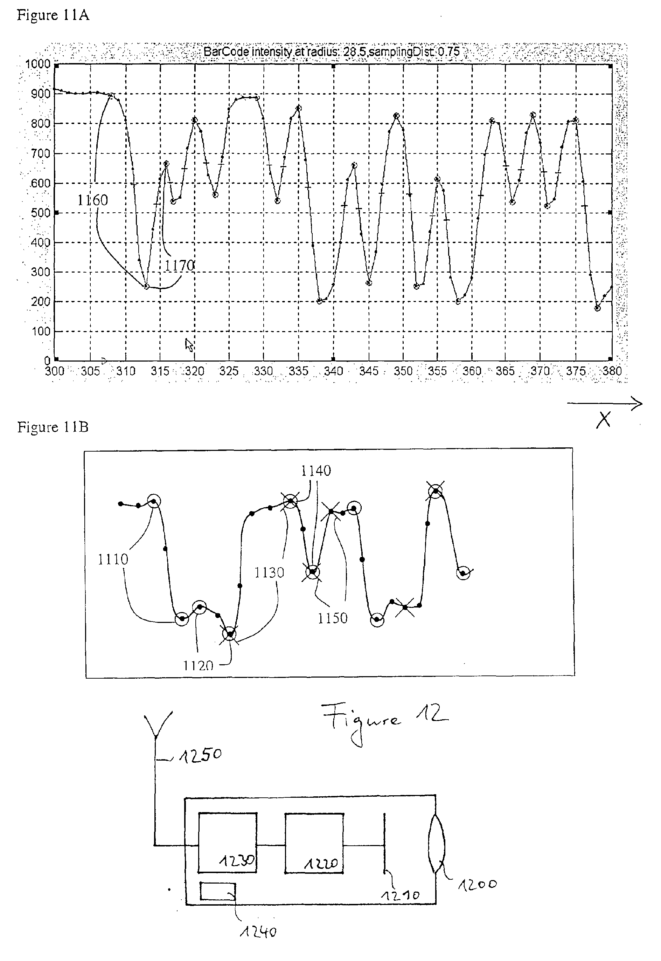

Step 160 serves to precisely locate the edges of the bar and space elements, to compensate the edge shifting effect discussed above. Figure 10 shows detailed processing for step 160. The bar code signal of Figure 8A is shown in Figure 11A, which is a further blown-up plot of Figure 8C with some processing results overlapping on the figure. From the 1-D intensity profile that represents a potential bar code signal, step 1010 finds all the local minima and maxima of the 1-D function, in alternating order. Step 1020 selects a set of neighboring Min-Max pairs and Max-Min pairs where the difference of intensities between the neighboring local minimum and the local maximum exceed a threshold. These pairs correspond to strong edge transitions from black to white or vice versa. Because low contrast lines can be present, as shown in Figure 8C, this intensity rise/fall threshold should be set to a level that can detect the low contrast bar or space elements while rejecting the noise.

Denoting the locations of these Max-Min and Max-Min pairs as

$$(X_{Max\text{-}MaxMinP}[0], X_{Min\text{-}MaxMinP}[0])\ (X_{Min\text{-}MinMaxP}[0], X_{Max\text{-}MinMaxP}[0])$$

$$(X_{Max\text{-}MaxMinP}[1], X_{Min\text{-}MaxMinP}[1])\ (X_{Min\text{-}MinMaxP}[1], X_{Max\text{-}MinMaxP}[1])\ ...$$

$$(X_{Max-MaxMinP}[i], X_{Min-MaxMinP}[i]) (X_{Min-MinMaxP}[i], X_{Max-MinMaxP}[i]) ...$$

all the X locations above are in the ascending order and are integers (multiples of the sampling distance, which can be 0.75 pixels as in Figure 8B). Here $X_{Max-MaxMinP}[0]$ and $X_{Min-MaxMinP}[0]$ are the locations of the local maximum and local minimum of the first Max-Min pair. This pair represents the first large falling edge (i.e., greater than the set threshold) of the bar code signal, as shown in Figure 11A at 1160 and Figure 11B at 1110. The $X_{Min-MinMaxP}[0]$ and $X_{Max-MinMaxP}[0]$ are the locations of the local minimum and local maximum of the first Min-Max pair. It is the first large rising edge of the bar code signal, as shown in Figure 11A at 1170 and Figure 11B at 1130. In Figure 11, the Max-Min pairs are marked by circles, while the Min-Max pairs are marked by crosses. It is possible that $X_{Min-MaxMinP}[0]$ and $X_{Min-MinMaxP}[0]$ are the same location as in the case of 1160 and 1170 in Figure 11A. It is not necessary that a Max-Min pair is followed by a Min-Max pair, even though in most cases it is because of the alternating bar and space elements in the bar code. In the case of Figure 11B, the first Max-Min pair 1110 is followed by another Max-Min pair 1120, then followed by a first Min-Max pair 1130. The Max-Min pair 1120 is present because the intensity fall of this Max-Min pair exceeds the set threshold. Usually this is caused by the over-enhancement of the edge in the circuitry of some cameras. The consequence is that an odd number of bar code edges are detected. In this case this potential bar code signal will be rejected in the future step 170.

Step 1030 performs moving averages of the minima values of the Min-Max pairs and Max-Min pairs and the maxima values of the Min-Max pairs and the Max-Min pairs of the four arrays:

$$I(X_{Max-MaxMinP}[0]), I(X_{Max-MaxMinP}[1]), ..., I(X_{Max-MaxMinP}[i]), ...$$

$$I(X_{Min-MaxMinP}[0]), I(X_{Min-MaxMinP}[1]), ..., I(X_{Min-MaxMinP}[i]), ..$$

$$I(X_{Min-MinMaxP}[0]), I(X_{Min-MinMaxP}[1]), ..., I(X_{Min-MinMaxP}[i]), ...$$

$$I(X_{Max-MinMaxP}[0]), I(X_{Max-MinMaxP}[1]), ..., I(X_{Max-MinMaxP}[i]), ...$$

with I(X) being the intensity of the bar code signal at location X. Therefore at each maximum location of the Max-Min pair, an average value $I\_AVG(X_{Max-MaxMinP}[i])$ of the neighbors of the same kind at that location is calculated.

This average can be written in the formula below.

$$I\_AVG(X_{Max-MaxMinP}[i]) = (I(X_{Max-MaxMinP}[i-n]) + I(X_{Max-MaxMinP}[I-n+1]) + ... I(X_{Max-MaxMinP}[i+n])) / (2n+1)$$

Here n is an empirical fixed parameter. The same formula applies to other three kinds of locations.

For each Max-Min pair i, step 1040 finds a middle intensity I_MIDDLE between $I(X_{Max-MaxMinP}[i])$ and $I(X_{Min-MaxMinP}[i])$ so that a precise edge location can be determined, whereby for each Max-Min pair a middle intensity based on the max and min values of this pair and the moving average of the min and max values of the Min-Min pairs is determined. The formula for the middle intensity I_MIDDLE is:

```
if    I(X_Max-MaxMinP[i]) > I_AVG(X_Max-MaxMinP[i])
      then I_HIGH = I_AVG(X_Max-MaxMinP[i]),
      else I_HIGH = I(X_Max-MaxMinP[i]).
if    I(X_Min-MaxMinP[i]) < I_AVG(X_Min-MaxMinP[i])
      then I_LOW = I_AVG(X_Min-MaxMinP[i]),
      else I_LOW = I(X_Min-MaxMinP[i]).
I_MIDDLE=(I_HIGH + I_LOW) / 2
```

Step 1050 then finds a sub-pixel accuracy location $X_{Edge\text{-}MaxMinP}[i]$ for the white to black edges between the Max-Min pair $X_{Max\text{-}MaxMinP}[i]$ and $X_{Min\text{-}MaxMinP}[i]$ so that the interpolated intensity at this location $X_{Edge\text{-}MaxMinP}[i]$ is equal to the computed middle intensity I_MIDDLE. These precise edge locations are marked as "+" in Figure 11A.

Step 1060 performs exactly the same procedure as step 1040 and 1050 except the computation is applied to the Min-Max pairs, or black to white edges.

To understand why the method described above can compensate for the width-dependent edge shift, reference is made to Figure 9. The edge 930 has a thick bar on the left and a narrow space on the right. The corresponding Min-Max pair is indicated by 970 and 980 (with cross marks). The intensity at 970 is "3" and is lower than the average of the minima of nearby Min-Max pairs since it is at the side of a thick bar. Therefore I_LOW will be replaced by the average value, which is higher than the value at this minimum location. The intensity at 980 is "5" and is lower than the average of the maxima of nearby Min-Max pairs; therefore the I_HIGH at this maximum location will use the original intensity instead of the average value. The net effect is that the middle intensity, as marked by "+" 990 in Figure 9, will be pushed away from the thick bar towards the thin space. This exactly compensates the shift due to low-pass filtering of the camera system, as shown by the vertical line 920, which is the true edge location.

The method also applies to the case of the edge 950, where both the I_LOW and I_HIGH will use original intensities instead of average intensities and there is no push of the edge since the right side and the left side of the edge are all narrow elements.

Once the precise edges are located, step 170 computes the widths of the alternating bar and space elements by calculating the differences between two neighboring edge locations. This requires that the number of edges detected is an even number since the total number of widths of a legitimate bar code is an odd number.

With the ordered list of widths obtained from step 170, step 180 then performs the bar code decoding based on the symbologies of various bar codes. The technique is well known in the literature.

Steps 160, 170, and 180 are repeated for different bar code signals detected from the 1-D intensity scan profile obtained in step 150 since there may have multiple bar codes in one scan profile, as shown in Figure 7, scan line 771.

When there is no bar code detected, step 190 uses a larger quiet zone size parameter Q to accommodate large size bar codes and repeat steps 150 to 180. This step can be repeated for more Q parameters, depending on the range of the bar code scale that the system intends to detect.

**Claims**

1. Method for bar code reading comprising the steps of:

   - recording a two-dimensional digital image including said bar code;
   - obtaining edge points (240) from said image;
   - selecting a reference point (230, 300);
   - projecting said edge points (240) on a line (320) including said reference point (300);
   - obtaining a direction of a cluster (330) of projected edge points;
   - obtaining an intensity profile (771, 772, 773) along a curve defined by said direction; and
   - decoding said bar code from said intensity profile.

2. Method according to claim 1,
   **characterized by**
   obtaining a count profile (570, 580) of projected edge points along a straight line including said reference point, comparing the count profile to a threshold value (530) to obtain a peak section (570, 580) along said straight line.

3. Method according to claim 2,
   **characterized by**
   obtaining multiple intensity profiles (771, 772, 773) normal to said straigth line crossing said line within said peak section (740).

4. Method according to claim 2 or 3,
   **characterized in that**
   said step of obtaining a count profile comprises accumulatively counting projected edge points within a predefined distance (DIST) apart from said straight line (395).

5. Method according to any of claims 1 to 4,

**characterized by**

detecting at least two quiet zones within an intensity profile by obtaining intensity value differences between successive sample points along said curve and by obtaining said quiet zones within a section of said curve where a predefined number (Q) of consecutive value differences being below a predefined threshold value.

6. Method according to any of claims 1 to 5,
   **characterized in that**
   said bar code comprises a sequence of elements (935, 936, 930) comprising bars and spaces between bars, each having a thickness, a location of edges of the intensity profile is obtained by compensating a low-pass filtering during the recording of the image.

7. Method according to claim 6,
   **characterized by**
   detecting local maxima and local minima in alternating order, defining first pairs of a local maximum being followed by a local minimum and second pairs of a local minimum being followed by a local maximum, calculating moving averages from a sequence of each of said local maxima and said local minima of each of said first and second pairs, calculating a middle intensity between any of said local maxima and local minima of said first and second pairs in response to respective ones of said local maxima and local minima and moving averages.

8. Apparatus for reading a bar code comprising:

   - an image acquisition device (1200, 1210) to record a two-dimensional digital image including said bar code;
   - an image processor (1220) for:

     - obtaining edge points (240) from said image;
     - selecting a reference point (230, 300);
     - projecting said edge points (240) on a line (320) including said reference point (300);
     - obtaining a direction of a cluster (330) of projected edge points;
     - obtaining an intensity profile (771, 772, 773) along a curve defined by said direction and
     - decoding said bar code from said intensity profile.

9. Apparatus according to claim 8,
   **characterized in that**
   said apparatus is a handheld device which is powered by a battery (1240).

10. Apparatus according to claims 8 or 9,
    **characterized by**
    a communication module (1230) to transmit the decoded bar code characters through a communication network.

Figure 1

```
         ┌─────────────┐
         │  2-D image  │
         └─────────────┘
                │
                ▼
    ┌──────────────────────┐
    │  Select strong edge  │ ～100
    │       points         │
    └──────────────────────┘
                │
                ▼
    ┌──────────────────────┐
    │  Perform clustering  │
    │  of bar code edge    │ ～110
    │  points using        │
    │  modified Hough      │
    │     transform        │
    └──────────────────────┘
                │
                ▼
    ┌──────────────────────┐
    │  Determine the bar   │
    │  directions of the   │ ～120
    │  bar codes that are  │
    │  parallel along this │
    │     direction        │
    └──────────────────────┘
                │
                ▼
    ┌──────────────────────┐
    │  For each detected   │
    │  bar direction,      │
    │  determine the       │ ～130
    │  extension of the    │
    │  parallel bar codes  │
    │  along the bar       │
    │     direction        │
    └──────────────────────┘
                │
                ▼
    ┌──────────────────────┐
    │  For each extension  │
    │  of the parallel bar │
    │  codes, acquire      │
    │  multiple 1-D        │ ～140
    │  intensity profiles  │
    │  of the image along  │
    │  straight lines      │
    │  orthogonal to the   │
    │  detected bar        │
    │     direction        │
    └──────────────────────┘
                │
                ▼
    ┌──────────────────────┐
    │  For each 1-D        │
    │  intensity profile,  │ ～150
    │  find two quiet       │
    │  zones with a        │
    │  potential bar code  │
    │  signal in between   │
    └──────────────────────┘
                │
                ▼
    ┌──────────────────────┐
    │  For each potential  │
    │  bar code signal, or │
    │  1-D intensity       │
    │  profile between the │ ～160
    │  quiet zones,        │
    │  determine the       │
    │  precise locations   │
    │  of the high         │
    │  contrast edges      │
    └──────────────────────┘
```

Compute the precise widths between the high contrast edges ～170

Decode the ordered list of widths based on the symbology of various types of bar codes ～180

Bar code recognized?  —Yes→  Bar code recognized

No↓

Use a different quiet zone parameter and repeat Steps 150-180 ～190

Bar code recognized?  —Yes→  Bar code recognized

No↓

No bar code recognized

Figure 2

Figure 4

Figure 3

Figure 3A

Figure 3B

Figure 5

Figure 5A

Figure 5B

Figure 6

Figure 7

Figure 8A

Bar code image: nokiam, Image size = 640 x 480

Figure 8B

BarCode intensity at radius 28.5,samplingDist. 0.75

Figure 8C

Figure 9

Figure 10

```
        ┌─────────────────────┐
        │   1-D potential     │
        │  bar code signal    │
        └─────────────────────┘
                   │
                   ▼
        ┌─────────────────────┐
1010    │ Find all the local  │
        │ minima and local    │
        │ maxima in           │
        │ alternating order   │
        └─────────────────────┘
                   │
                   ▼
        ┌─────────────────────┐
        │ Find pairs of       │
        │ neighboring local   │
1020    │ minimum and         │
        │ maximum whose       │
        │ intensity's rise or │
        │ fall exceeds a      │
        │ threshold.          │
        └─────────────────────┘
```

| 1030 | Perform moving averages of the minima values of the Min-Max pairs and Max-Min pairs and the max values of the Min-Max pairs and the Max-Min pairs |

| 1040 | For each Max-Min pair, determine a middle intensity based on the max and min values of this pair and the moving average of the min and max values of the Min-Min pairs |

| 1050 | Find the location between the Max-Min pair where its intensity is equal to the middle intensity computed in Step 1040. This is the edge location of this white-to-black edge (or Max-Min pair) |

| 1060 | Perform similar step 1040 and 1050 for Min-Max pairs, or black-to-white edges. |

```
        ┌─────────────────────┐
        │    To Step 170      │
        └─────────────────────┘
```

Figure 11A

BarCode intensity at radius: 28.5,samplingDist:0.75

1160

1170

X

Figure 11B

1140

1110

1130

1120

1150

Figure 12

1250

1230

1220

1240

1210

1200

## EUROPEAN SEARCH REPORT

**European Patent Office**

Application Number

EP 00 11 8002

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MUNIZ R ET AL: "A robust software barcode reader using the Hough transform" PROCEEDINGS 1999 INTERNATIONAL CONFERENCE ON INFORMATION INTELLIGENCE AND SYSTEMS (CAT. NO.PR00446), PROCEEDINGS 1999 INTERNATIONAL CONFERENCE ON INFORMATION INTELLIGENCE AND SYSTEMS, BETHESDA, MD, USA, 31 OCT.-3 NOV. 1999, pages 313-319, XP002157449 1999, Los Alamitos, CA, USA, IEEE Comput. Soc, USA ISBN: 0-7695-0446-9 * pages 315-317, chapters 4 and 5 * | 1-10 | G06K9/32 G06K7/10 |
| A | DUDA R O ET AL: "USE OF THE HOUGH TRANSFORMATION TO DETECT LINES AND CURVES IN PICTURES" COMMUNICATIONS OF THE ASSOCIATION FOR COMPUTING MACHINERY,US,ASSOCIATION FOR COMPUTING MACHINERY. NEW YORK, vol. 5, no. 1, 1972, pages 11-15, XP002038006 ISSN: 0001-0782 * page 11, paragraph 2 - page 12, paragraph 3 * * page 13, left-hand column, line 27 - line 38 * | 1-10 | TECHNICAL FIELDS SEARCHED (Int.Cl.7) G06K |
| A | PATENT ABSTRACTS OF JAPAN vol. 018, no. 189 (P-1721), 31 March 1994 (1994-03-31) & JP 05 346967 A (OLYMPUS OPTICAL CO LTD), 27 December 1993 (1993-12-27) * abstract * -/-- | 1-10 | |

The present search report has been drawn up for all claims

| Place of search | Date of completion of the search | Examiner |
|---|---|---|
| MUNICH | 22 January 2001 | Kessler, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 11 8002

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 054 098 A (LEE YONGCHUN) 1 October 1991 (1991-10-01) * abstract; figures 3,4A,4B * * column 4, line 30 - column 5, line 47 * | 1-10 | |
| | | | **TECHNICAL FIELDS SEARCHED** (Int.Cl.7) |

The present search report has been drawn up for all claims

| Place of search | Date of completion of the search | Examiner |
|---|---|---|
| MUNICH | 22 January 2001 | Kessler, C |

## ANNEX TO THE EUROPEAN SEARCH REPORT
## ON EUROPEAN PATENT APPLICATION NO.

EP 00 11 8002

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2001

| Patent document cited in search report | Publication date | Patent family member(s) | Publication date |
|---|---|---|---|
| JP 05346967 A | 27-12-1993 | NONE | |
| US 5054098 A | 01-10-1991 | EP 0482188 A | 29-04-1992 |
| | | JP 5500285 T | 21-01-1993 |
| | | WO 9118366 A | 28-11-1991 |

EPO FORM P0459